# EUROPÄISCHE PATENTSCHRIFT

(11) **EP 3 708 287 B1**
(45) Veröffentlichungstag und Bekanntmachung des Hinweises auf die Patenterteilung: **26.06.2024**
(21) Anmeldenummer: 19163142.3
(22) Anmeldetag: 15.03.2019
(51) Int. Cl.: B23K 11/00, B21F 27/10, B23K 37/02, B25H 1/00

(54) **VERSCHIEBEWAGEN FÜR EINE SCHWEISSMASCHINE, INSBESONDERE FÜR EINE GITTERSCHWEISSMASCHINE**
CARRIER FOR A WELDING MACHINE, IN PARTICULAR FOR A GRID WELDING MACHINE
CHARIOT DE DÉPLACEMENT POUR UNE MACHINE À SOUDER, EN PARTICULIER POUR UNE MACHINE À SOUDER DE GRILLAGE

(43) Veröffentlichungstag der Anmeldung: 16.09.2020
(73) Patentinhaber: Ideal-Werk C. & E. Jungeblodt GmbH & Co.KG, 59557 Lippstadt (DE)
(72) Erfinder: JUNGEBLODT, Max Clemens, 59555 lippstadt (DE); SCHNEIDER, Thomas, 59557 lippstadt (DE)
(74) Vertreter: Schäperklaus, Jochen

(56) Entgegenhaltungen:
- EP-A2- 2 161 111
- DE-U1-202013 101 150
- US-A- 5 836 365
- US-A1- 2008 203 259

## Beschreibung

Die vorliegende Erfindung betrifft eine verschiebbare Tragvorrichtung z.B. für Elektroden einer Schweißmaschine, insbesondere für eine Gitterschweißmaschine.

Verschiebbare Tragvorrichtungen sind beispielsweise aus den Dokumenten AT 413 956 B, AT 519 106 B1, DE 20 2013 101 150 U1 und EP 2 781 294 A2 bekannt.

Die in diesen Dokumenten offenbarten Tragvorrichtungen sind mit Klemmmitteln an einer Klemmschiene der Schweißmaschine lösbar festgeklemmt. Zur Änderung der Position der Tragvorrichtungen kann die Klemmung gelöst werden. Nach dem Lösen der Klemmung kann die Tragvorrichtung in eine neue Position bewegt werden. Das ist zum Beispiel notwendig, wenn in einer Gitterschweißmaschine Gitter mit verschiedenen Drahtabständen hergestellt werden sollen. In der neuen Position wird die Tragvorrichtung mit seinen Klemmmitteln erneut festgeklemmt.

Zum Bewegen der Tragvorrichtungen von der einen in die andere Position wird die Tragvorrichtung mit einem Wagen gekoppelt. Der Wagen weist Führungsmittel auf. Über diese ist der Wagen auf einer Führungsschiene linear verschiebbar. Sobald eine tragende Verbindung zwischen dem Wagen und der Tragvorrichtung hergestellt ist, wird die Klemmverbindung zwischen der Tragvorrichtung und der Klemmschiene gelöst. Der Wagen mit der angekoppelten Tragvorrichtung wird in die neue Position verschoben. Die Tragvorrichtung wird in der neuen Position festgeklemmt und die Verbindung zwischen der Tragvorrichtung und dem Wagen gelöst. Der Wagen kann dann dazu genutzt werden, weitere Tragvorrichtungen der Schweißmaschine neu zu positionieren.

Das Bewegen der Tragvorrichtungen aus einer alten in eine neue Position ist aufgrund der Führung des Wagens auf der Führungsschiene ohne viel Kraftaufwand möglich. Anders wäre es, wenn ein derartiger Wagen, an den die Tragvorrichtungen zum Verschieben in die neue Position angekoppelt werden, nicht vorhanden wäre: Dann müssten die Tragvorrichtungen auf der Klemmschiene verschoben werden, was aufgrund eines Spiels zwischen Tragvorrichtung und Klemmschiene bei gelösten Klemmmitteln nicht immer einfach möglich ist, da die Klemmmittel und die Klemmschiene nicht als Führung ausgelegt sind. Die Tragvorrichtungen neigen zum Verkanten, was eine Bewegung erschwert. Das Verschieben der Tragvorrichtungen mittels eines Wagens ist daher von Vorteil.

Das Verschieben der Tragvorrichtungen mittels eines Wagens hat aber auch Nachteile: So muss jeder Tragvorrichtung zunächst mit dem Wagen gekoppelt und anschließend wieder vom Wagen abgekoppelt werden. Das kostet Zeit. Außerdem können die Tragvorrichtungen nur nacheinander neu positioniert werden, nicht aber gleichzeitig. Auch das kostet Zeit. Schließlich entstehen durch den Mechanismus zum Koppeln von Tragvorrichtung und Wagen zusätzliche Kosten.

Hier setzt die Erfindung an.

Der Erfindung liegt die Aufgabe zu Grunde, eine Tragvorrichtung einer Schweißmaschine so zu verbessern, dass sie schnell und einfach entlang einer Klemmschiene von einer ersten Position in eine zweite Position verschoben werden kann.

Ausgehend vom Stand der Technik, wie er aus den Dokumenten AT 413 956 B, AT 519 106 B1, DE 20 2013 101 150 U1 und EP 2 781 294 A2 bekannt ist, wird eine Tragvorrichtung dadurch weitergebildet, dass die Tragvorrichtung und nicht wie beispielsweise bei der

Vorrichtung aus dem Dokument DE 20 2013 101 150 U1 (welche die Grundlage für den Oberbegriff des Anspruchs 1 bildet) ein mit der Tragvorrichtung koppelbarer Wagen Führungsmittel aufweist, mit denen die Tragvorrichtung auf einer Führungsschiene der Schweißmaschine verschiebbar ist, wobei die Klemmmittel in eine erste Richtung linear verschiebbar an den Führungsmitteln befestigt sind.

Der Erfindung liegt folgende Erkenntnis zu Grunde:
Die Tragvorrichtung soll im Zustand, in dem geschweißt werden soll, fest positioniert sein, u.a. um die beim Schweißen auftretenden Kräfte aufzunehmen, ohne dabei verschoben zu werden. In diesem Zustand werden die Kräfte von den Klemmmitteln auf die Klemmschiene übertragen. Die Klemmmittel und die Klemmschiene tragen möglichst die gesamte Masse der Tragvorrichtung und der daran befestigten Elemente. Andererseits sollten die Führungsmittel der Tragvorrichtung beim Schweißen möglichst nicht belastet werden, da die auftretenden Kräfte ansonsten die Führungsmittel und/oder die Führungsschiene beschädigen könnten. Eine Beschädigung der Führungsmittel und/oder der Führungsschiene könnte, falls sie große Kräfte übertragen sollten, nur dadurch vermieden werden, dass die Führungsmittel und/oder die Führungsschiene besonders dafür ausgelegt sind, was in der Regel sehr aufwändig ist.

Dagegen sollen im Zustand, in dem die Tragvorrichtungen positioniert werden sollen, die Klemmmittel und die Klemmschiene möglichst entlastet werden und die Masse der Tragvorrichtung und der daran befestigten Elemente vom Führungsmittel und von der Führungsschiene getragen werden, so dass er mittels der durch die Führungsmittel und die Führungsschiene hergestellten Führung leicht und ohne großen Kraftaufwand verschoben werden kann.

Die erfindungsgemäße Verschiebbarkeit von Führungsmittel und Klemmmittel zueinander macht es möglich, in einem Zustand, d.h. in einer Relativposition von Führungsmitteln und Klemmmitteln zueinander, die Führungsmittel mit dem Gewicht der Tragvorrichtung und aller damit verbundenen Elemente zu belasten und in einem zweiten Zustand, d.h. in einer zweiten Relativposition von Führungsmitteln und Klemmmitteln zueinander, die Klemmmittel mit dem Gewicht des und aller damit verbundenen Elemente sowie der beim Schweißen auftretenden Kräfte zu belasten.

Ein weiterer Vorteil der erfindungsgemäßen Tragvorrichtung ist, dass mehrere Tragvorrichtungen gleichzeitig verschoben werden können. Es ist sogar möglich benachbarte Tragvorrichtungen en bloc zu verschieben.

Die Klemmmittel können eine erste Klemmbacke und eine zweite Klemmbacke umfassen, die in einer zweiten Richtung, verschieden von der ersten Richtung relativ zueinander bewegbar werden können. Wenigstens eine der beiden Klemmbacken, vorzugsweise beide Klemmbacken weisen eine zur ersten Richtung geneigte Klemmfläche auf, mittels welcher die Relativbewegung der Klemmbacken zueinander in eine Bewegung der Klemmmittel zu den Führungsmitteln in die zweite Richtung umwandelbar ist. Die Klemmschiene, mit der die Klemmbacken zusammenwirken, kann dann zum Beispiel ein Schwalbenschwanzprofil aufweisen. Ein solches Schwalbenschwanzprofil weist hinterschnittene Flächen auf, an denen die geneigten Flächen anliegen. Durch ein Ziehen der Backen gegen die geneigten Flächen beim Klemmen der Klemmmittel kann es dann zu einer Bewegung der Klemmmittel in die erste Richtung zu den Führungsmitteln kommen, die die Führungsmittel von dem Gewicht der Klemmmittel und der damit verbunden Elemente entlastet.

Vorzugsweise können die Klemmmittel einen Klemmbackenführungskörper umfassen, in dem wenigstens eine Führung für die Klemmbacken vorgesehen ist. Die Führung kann wenigstens einen Führungskanal aufweisen, in dem ein Abschnitt jeder der beiden Klemmbacken angeordnet ist.

Der wenigstens eine Führungskanal kann einen Boden und dazu vorzugsweise senkrechte und parallel zu der zweiten Richtung ausgerichtete Seitenwände haben, wobei eine erste Übergangsfläche zwischen dem Boden und jeder der Seitenwänden vorgesehen ist, die einen ersten Winkel zwischen Boden und Übergangsfläche und einen zweiten Winkel zwischen der ersten Übergangsfläche und der Seitenwand aufweist, wobei die Summe des ersten Winkels und die Summe des zweiten Winkels vorzugsweise 90° beträgt. Der erste Winkel und der zweite Winkel sind dabei ungleich 0° und ungleich 90°. Vorzugsweise betragen der erste Winkel und der zweite Winkel 45°. Die Übergangsflächen können Flächen bilden, auf denen die in dem Führungskanal vorgesehenen Abschnitte der Klemmbacken gleitend geführt sind. Dadurch, dass die Übergangsflächen in einem Winkel von vorzugsweise 90° zueinander geneigt sind, ist eine gute Führung der Klemmbacken möglich.

Der im Führungskanal vorgesehene Abschnitt jeder Klemmbacke kann zwei parallele Seitenwände habe, die über zweite Übergangsflächen mit einer Unterseite des Abschnitts verbunden sind, wobei ein Winkel zwischen der Unterseite und den zweiten Übergangsflächen den gleichen Betrag hat, wie der erste Winkel, und ein Winkel zwischen den zweiten Übergangsflächen und den Seitenwänden den gleichen Betrag hat, wie der zweite Winkel. Damit ist es möglich, dass der Abschnitt mit seinen Übergangsflächen satt auf den Übergangsflächen des Führungskanals aufliegt, was ein einfaches lineares Gleitlager möglich macht.

Die lichte Weite des Führungskanals zwischen dessen Seitenwänden ist etwas größer als der Abstand der Seitenwände der im Führungskanal vorgesehenen Abschnitte der Klemmbacken. Vorzugsweise liegt zwischen Führungskanal und den Abschnitten der Klemmbacken eine Spielpassung vor.

Die Unterseite der im Führungskanal vorgesehenen Abschnitte der Klemmbacken ist vorzugsweise breiter als der Boden des Führungskanals. Außerdem haben die Unterseite und der Boden vorzugsweise einen Abstand voneinander. Dadurch wird es vereinfacht, dass die Abschnitte der Klemmbacken auf den Übergangsflächen des Führungskanals geführt werden.

Die Bewegung des Führungsmittels und des Klemmmittels in der ersten Richtung zueinander, die erfindungsgemäß möglich ist, kann konstruktiv begrenzt sein. Dazu können das Führungsmittel und das Klemmmittel Anschlagsflächen aufweisen, durch die die Bewegung des Klemmmittels zum Führungsmittel in der ersten Richtung begrenzt ist.

Gemäß der Erfindung kann eine erfindungsgemäße Tragvorrichtung mit einer Führungsschiene und einer Klemmschiene zu einer Anordnung kombiniert werden, wobei die Führungsschiene und die Klemmschiene fest miteinander verbunden sind, wobei die Führungsmittel der Tragvorrichtung in oder auf der Führungsschiene verschiebbar angeordnet sind und wobei die Klemmmittel in einem ersten Zustand der Klemmmittel an, in oder auf der Klemmschiene festgeklemmt sind und in einem zweiten Zustand der Klemmmittel zu der Klemmschiene bewegbar sind.

In dem ersten Zustand kann die Klemmschiene die Klemmmittel und ggf. an die Klemmmittel befestigte weitere Mittel tragen und beim Schweißen auftretende Kräfte aufnehmen. Die Führungsschiene trägt im ersten Zustand vorteilhaft die Führungsmittel. Im zweiten Zustand kann die Führungsschiene die Führungsmittel, die Klemmmittel und ggf. an die Klemmmittel befestigte weitere Mittel tragen. Da im zweiten Zustand der Klemmmittel nicht geschweißt wird, werden im zweiten Zustand keine beim Schweißen auftretenden Kräfte übertragen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:

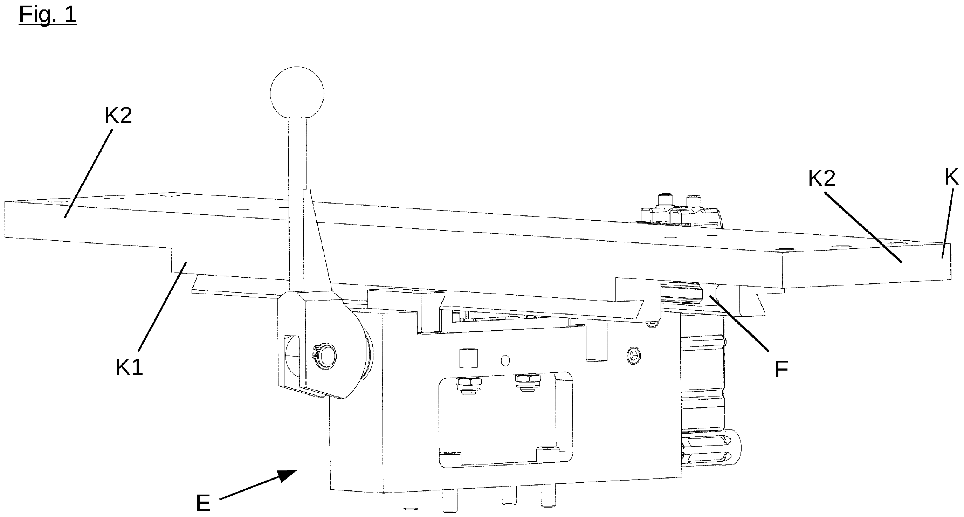

- Fig. 1: eine perspektivische Darstellung einer erfindungsgemäßen Anordnung umfassend eine erfindungsgemäße Tragvorrichtung, eine Klemmschiene und eine Führungsschiene,

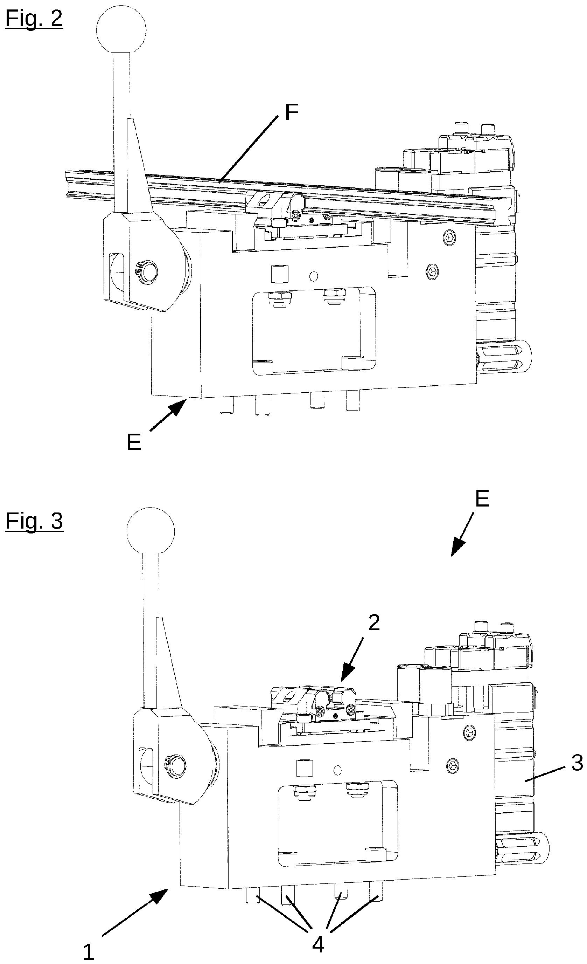

- Fig. 2: eine perspektivische Darstellung entsprechend Fig. 1 der Tragvorrichtung und der Führungsschiene,
- Fig. 3: eine perspektivische Darstellung entsprechend Fig. 1 und 2 der Tragvorrichtung,

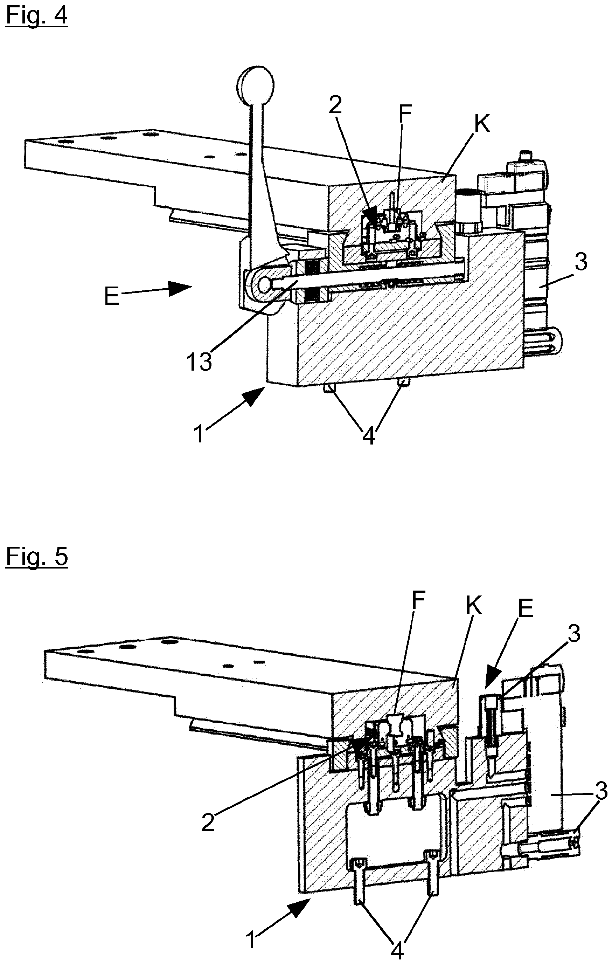

- Fig. 4: eine perspektivische Darstellung entsprechend Fig. 1 bis 3 eines ersten Schnitts durch die Tragvorrichtung,
- Fig. 5: eine perspektivische Darstellung entsprechend Fig. 1 bis 3 eines zweiten Schnitts durch die Tragvorrichtung,

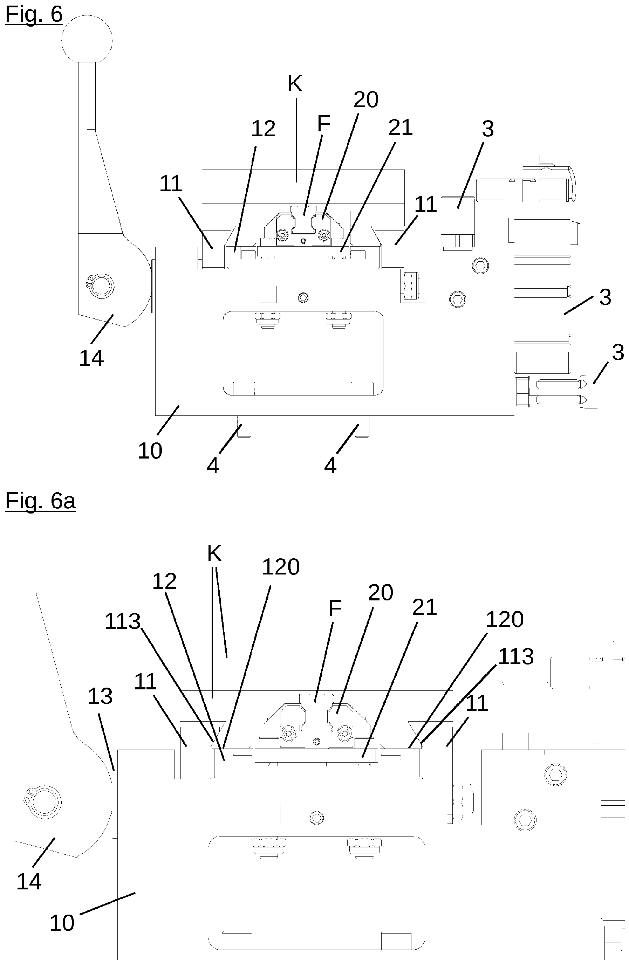

- Fig. 6: eine Seitenansicht der Anordnung,
- Fig. 6a: einen vergrößerten Ausschnitt aus Fig. 6,

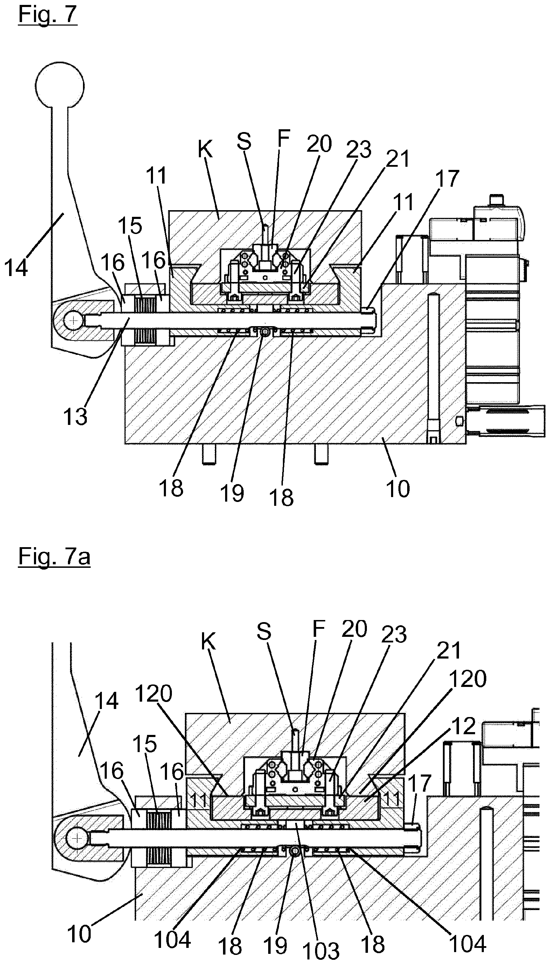

- Fig. 7: eine Ansicht der Schnittfläche des ersten Schnitts aus Fig. 4,
- Fig. 7a: einen vergrößerten Ausschnitt aus Fig. 7,

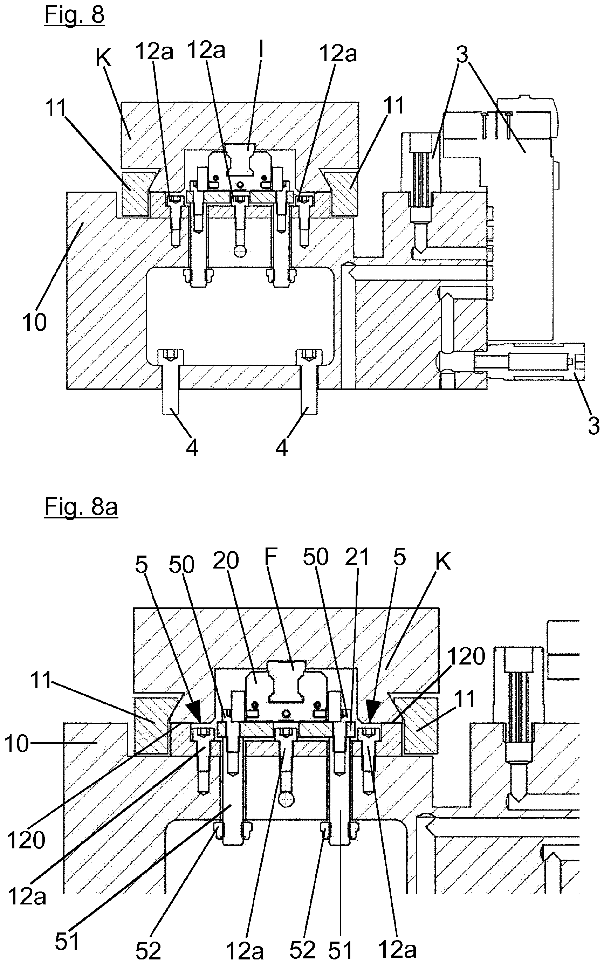

- Fig. 8: eine Ansicht der Schnittfläche des zweiten Schnitts aus Fig. 5,
- Fig. 8a: einen vergrößerten Ausschnitt aus Fig. 8,
- Fig. 9: eine perspektivische Ansicht wesentlicher Teile der Tragvorrichtung,
- Fig. 10: eine perspektivische Darstellung entsprechend Fig. 9 eines Schnitts durch die wesentlichen Teile der Tragvorrichtung und
- Fig. 11: eine Ansicht der Schnittfläche des Schnitts aus Fig. 10.

Die in den Figuren dargestellte erfindungsgemäße Anordnung E, F, K, kann Teil einer Gitterschweißmaschine sein. Vorzugsweise sind die Führungsschiene F und die Klemmschiene K an einem Portal oder einer Traverse der Gitterschweißmaschine angeordnet, die sich über der Ebene befindet, in der die Gitter geschweißt werden. Auf der Führungsschiene F und der Klemmschiene K ist die Tragvorrichtung E angeordnet, was noch näher erläutert wird.

Die Klemmschiene K hat drei Abschnitte. Zwei Endabschnitte K 2 und einen mittleren Abschnitt K 1. Über die Endabschnitte K 2 kann die Klemmschiene K an dem Portal oder der Traverse der Gitterschweißmaschine befestigt werden. Der mittlere Abschnitt hat ein zweigeteiltes Schwalbenschwanzprofil. Die Zweiteilung des Schwalbenschwanzprofils entsteht dadurch, dass eine Nut in das Schwalbenschwanzprofil eingebracht ist. In dieser Nut ist die Führungsschiene F an der Klemmschiene K befestigt.

Die Führungsschiene F ist eine Führungsschiene, wie sie im Maschinenbau häufig verwendet wird.

Die Tragvorrichtung E ist eine komplexe Baugruppe. Er umfasst unter anderem Klemmmittel 1, Führungsmittel 2, weitere Mittel 3 und Schrauben 4, über die andere weitere Mittel an die Klemmmittel 1 angeschlossen werden können.

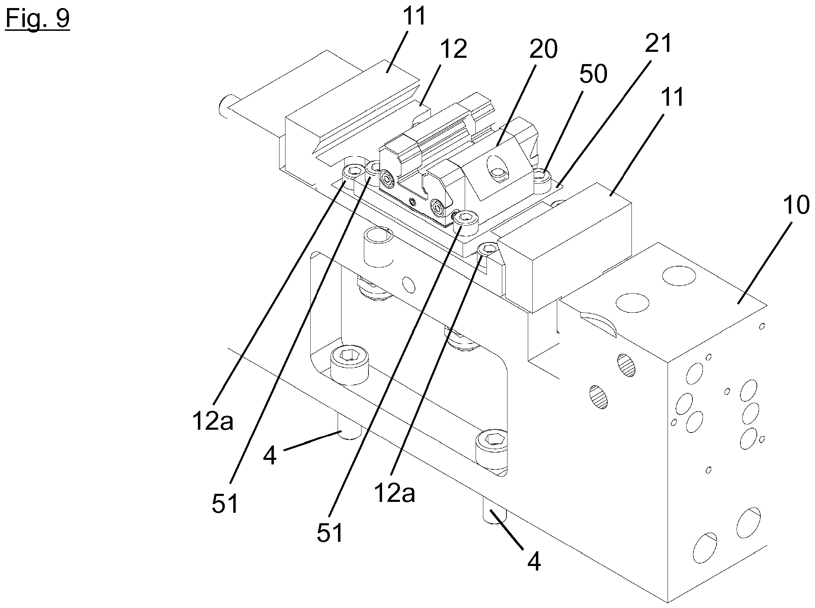

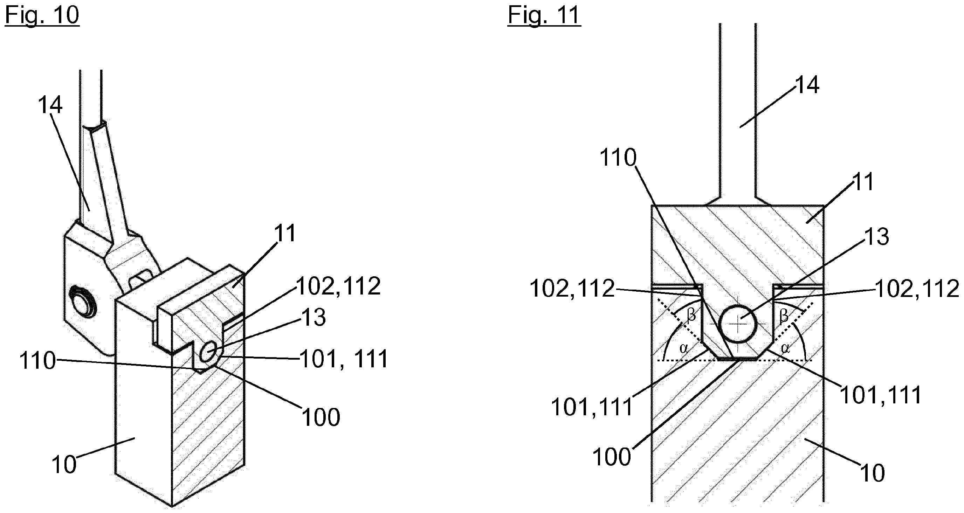

Die Klemmmittel 1 umfassen einen Klemmbackenführungskörper 10 (siehe Figur 9), in bzw. an dem zwei Klemmbacken 11 (siehe Figur 9) verschiebbar befestigt sind (siehe insbesondere Figuren 9, 10, 11). Die Klemmbacken 11 weisen Abschnitte auf, die in einem Führungskanal 100, 101, 102 des Führungskörpers 10 angeordnet sind. Der Führungskanal 100, 101, 102 hat einen Boden 100 und zwei parallel zueinander und senkrecht zu dem Boden 100 angeordnete Seitenwände 102. Zwischen dem Boden 100 und den beiden Seitenwänden 102 ist jeweils eine Übergangsfläche 101 vorgesehen. Der Boden 100 und die Übergangsflächen 101 liegen in Ebenen, die einen ersten Winkel α von 45° einschließen. Die Ebenen der Übergangsflächen 101 und die Ebenen der daran anschließenden Seitenwände 102 schließen einen zweiten Winkel β von 45° ein.

Der Führungskanal 100, 101, 102 ist durch einen Steg 103 in zwei Abschnitte unterteilt. In dem Steg 103 ist ein Durchgangsloch vorgesehen. In dem Durchgangsloch ist eine Zugstange 13 verschiebbar gelagert. Diese Zugstange 13 weist in einem mittleren Bereich eine Abflachung auf. Diese wirkt mit einem Splint 19 zusammen, der quer zur Zugstange 13 durch den Steg 13 geführt ist. Die Zugstange 13 kann in den Bohrungen in ihrer Längsrichtung hin und her bewegt werden. Der Weg, der bei dieser Bewegung ausgeführt werden kann, wird durch die Abflachung und den Splint 19 begrenzt. Die Abflachung und der Splint 19 verhindern auch, dass die Zugstange 13 aus dem Führungskörper 10 herausgezogen werden kann.

Auf der Zugstange 13 sind die Klemmbacken 11 angeordnet. Die Zugstange 13 durchdringt dabei die in dem Führungskanal 100, 101, 102 angeordneten Abschnitte der Klemmbacken 11, die dazu Durchgangslöcher aufweisen. Diese Durchgangslöcher der Klemmbacken 11 haben in den dem Steg 103 zugewandten Abschnitten einen größeren Durchmesser als in den den Enden des Führungskanals 100, 101, 102 zugewandten Abschnitten. Dadurch ist in den Durchgangslöchern je ein Absatz 104 gebildet. Auf diesen Absätzen 104 stützt sich je eine Druckfeder 18 mit einem Ende ab. Ein anderes Ende der Druckfedern 18 ist auf dem Steg 103 des Führungskörpers 10 abgestützt.

An einem Ende der Zugstange 13 ist ein Außengewinde vorgesehen, auf das eine Mutter 17 geschraubt ist. Das andere, gegenüberliegende Ende der Zugstange 13 ist mit einem Exzenterhebel 14 schwenkbar verbunden. Zwischen einer Exzenterfläche des Exzenterhebels 14 und der nächstliegenden Klemmbacke 11 ist zwischen zwei gelochten Kreisscheiben 16 ein Pakt 15 von Tellerfedern angeordnet. Der Exzenterhebel dient der Klemmung der Klemmmittel 1 auf der Klemmschiene K. Anstelle eines Exzenters könnte auch ein anderer Mechanismus gewählt werden, um die Klemmkraft zu erzeugen. Ein solcher anderer Mechanismus könnte beispielsweise Schrauben, insbesondere Sternschrauben aufweisen.

Die in den Führungskanal 100, 101, 102 angeordneten Abschnitte der Klemmbacken 11 haben ein äußeres Querschnittsprofil, das dem inneren Querschnittsprofil des Führungskanals 100, 101, 102 ähnlich ist. Die Abschnitte weisen eine Unterseite 110 auf. Senkrecht zu der Unterseite sind zwei Seitenwände 112 parallel zueinander angeordnet. Der Abstand zwischen den Seitenwänden 102 des Führungskanals voneinander ist im Vergleich zu dem Abstand der Seitenwände 112 der Abschnitte der Klemmbacken 11 geringfügig größer, so dass die Abschnitte der Klemmbacken 11 zwischen den Seitenwänden 102 des Führungskanals verschoben werden können. Zwischen der Unterseite 110 und den Seitenwänden 112 der Abschnitte sind Übergangsflächen 111 vorgesehen, die parallel zu den Übergangsflächen 102 des Führungskanals sind. Die Unterseite 112 der Abschnitte der Klemmbacken 11 sind breiter als der Boden 100 des Führungskanals. Dadurch kommt es dazu, dass die Klemmbacken 11 mit ihren Übergangsflächen 111 auf den Übergangsflächen 101 aufliegen. Die Flächen 101, 111 gleiten aufeinander, wenn die Klemmbacken 11 im Führungskanal 100, 101, 102 verschoben werden.

Ein Deckel 12, der mit Schrauben 12a an dem Klemmbackenführungskörper 10 angeschraubt ist, verschließt einen mittleren Bereich des Führungskanals 100, 101, 102, so dass die Klemmbacken 11 einerseits mit ihren im Führungskanal 100, 101, 102 angeordneten Abschnitten im Führungskanal 100, 101, 102 geführt sind und andererseits Klemmflächen 113 der Klemmbacken 11 außerhalb des Führungskanals 100, 101, 102 liegen.

Durch eine Betätigung des Exzenterhebels 14 in einer ersten Richtung wird der Abstand zwischen der Mutter 17 und der Exzenterfläche des Exzenterhebels verkürzt. Das Tellerfedernpaket 15 wird zusammengedrückt. In diesem zusammengepressten Zustand ist das Tellerfederpaket 15 dargestellt. Die Klemmmittel 1 sind dann gespannt und in einem ersten Zustand. Die Klemmbacken 11 sind dann auf der Zugstange 13 gegen die Kraft der Druckfedern 18 aufeinander zu und in Richtung des Stegs 103 gedrückt.

Wird der Exenterhebel 14 dagegen in eine entgegengesetzte Richtung bewegt, wird der Abstand zwischen der Mutter 17 und der Exzenterfläche des Exzenterhebels 14 verlängert. Die Klemmmittel 1 sind dann in einem zweiten Zustand. Sowohl das Tellerfedernpaket 15 als auch die Druckfedern 18 sind entspannt. Die Klemmbacken 11 werden dadurch voneinander weg und vom Steg 103 weggedrückt. Der Abstand der Klemmbacken 11 zueinander vergrößert sich dadurch.

Die Klemmflächen 113 der Klemmbacken 11 sind relativ zur der Richtung geneigt, in der die Klemmbacken 11 verschiebbar gelagert sind. Diese Klemmflächen 113 wirken mit Hinterschnitten des Schwalbenschanzprofils K1 der Klemmschiene K zusammen. Im ersten Zustand der Klemmmittel 1 hintergreifen die Klemmflächen 113 die Hinterschnitte des Schwalbenschanzprofils K1. Durch die Kraft, mit welcher der Exzenterhebel 14 gegen das Federpaket 15 gedrückt wird, werden die Klemmflächen 113 gegen die Klemmschiene K gedrückt. Dabei rutschen die Klemmflächen 113 auf den Flächen der Hinterschnitte der Klemmschiene ein Stück nach oben, bis Anschlagsflächen 120 des Deckel 12 an der Unterseite der Klemmschiene K anliegen. Dadurch sind die Klemmbacken 11 im ersten Zustand der Klemmmittel 1 fest mit der Klemmschiene K verbunden.

An den Klemmmitteln 1 sind die Führungsmittel 2 der Tragvorrichtung E linear verschiebbar gelagert.

Die Führungsmittel umfassen die Führungsbaugruppe 20, die vom Grundsatz eine im Maschinenbau übliche Baugruppe ist und die auf deren Gestaltung auf die Führungsschiene F abgestimmt ist. Die Führungsbaugruppe 20 ist auf der Führungsschiene F verschiebbar gelagert.

Eine Unterseite der Führungsbaugruppe 20 ist über Schrauben 23 mit einer Platte 21 festverbunden.

Die Platte 21 weist bei dem dargestellten Ausführungsbeispiel vier Durchgangslöcher auf, die Flucht mit einer entsprechenden Zahl von Durchgangslöchern im Klemmmittel 1, nämlich im Deckel 12 und im Führungsköper 10 vorgesehen sind. Diese Durchgangslöcher gehen beidseitig an dem Führungskanal 100, 101, 102 vorbei. Die Durchgangslöcher in dem Deckel 12 und Führungskörper 10 werden von je einem Bolzen 51 durchgriffen. Die Bolzen 51 ragen auf einer dem Führungsmittel 2 abgewandten Seite aus dem Führungsköper 10 heraus. Die herausragenden Enden der Bolzen 51 weisen ein Außengewinde auf, auf das eine Mutter 52 aufgeschraubt ist. Die Muttern 52 haben in dem in den Figuren dargestellten ersten Zustand der Klemmmittel einen Abstand zu dem Führungskörper 10. Die diesen mit den Muttern 52 versehenen Enden entgegengesetzten Enden der Bolzen 51 weisen eine axiale Gewindebohrung auf, in die eine Schraube 50 eingeschraubt ist. Die Schrauben 50 sind mit Spiel durch die Durchgangslöcher in der Platte 21 geführt. Die Schrauben 50, die Bolzen 51 und die Muttern 52 bilden zusammen mit den Durchganglöchern, durch die sie geführt sind, eine Linearführung, über die die Klemmmittel 1 und die Führungsmittel 2 gegeneinander in der ersten Richtung verschoben werden können.

Werden die Klemmmittel 1 in den zweiten Zustand überführt, öffnen sich die Klemmbacken 11. Dadurch rutschen die Klemmflächen 113 auf den Flächen der Hinterschnitte nach unten und kommen von den Flächen der Hinterschnitte frei, wenn bei einer Neigung der Klemmflächen um 45° zur Horizontalen die Bewegung der Klemmbacken nach außen größer ist als die Abwärtsbewegung der Klemmmittel 1 in die erste Richtung. Die Klemmmittel 1 und die daran befestigten weiteren Mittel 3 und über die Schrauben 4 befestigten Mittel hängen an den Führungsmitteln 2. Das Gewicht der Tragvorrichtung wird dann über die Führungsmittel 2 in die Führungsschiene F abgeleitet. Die Tragvorrichtung E kann dann auf der Führungsschiene F verschoben werden.

## Patentansprüche

1. Verschiebbare Tragvorrichtung (E) z.B. für Elektroden einer Schweißmaschine, insbesondere für eine Gitterschweißmaschine,
- mit Klemmmitteln (1), mit denen die Tragvorrichtung (E) an einer Klemmschiene (K) der Gitterschweißmaschine festklemmbar ist,
- wobei die Klemmmittel (1) wenigstens ein Anschlusselement aufweisen, an welchem weitere Mittel (3), zum Beispiel wenigstens eine Elektrode befestigbar sind,
- **gekennzeichnet durch**
Führungsmittel (2), mit denen die Tragvorrichtung (E) auf einer Führungsschiene (F) der Schweißmaschine verschiebbar ist,
wobei
- die Führungsmittel (2) ein Teil der Tragvorrichtung (E) und nicht Teil eines mit der Tragvorrichtung (E) koppelbaren Wagens sind und
- die Klemmmittel (1) in einer ersten Richtung linear verschiebbar an den Führungsmitteln (2) befestigt sind.

2. Tragvorrichtung (E) nach Anspruch 1, **dadurch gekennzeichnet, dass** die Klemmmittel (K1) eine erste Klemmbacke (11) und eine zweite Klemmbacke (11) umfassen, die in einer zweiten Richtung verschieden von der ersten Richtung relativ zueinander bewegbar sind.

3. Tragvorrichtung (E) nach Anspruch 2, **dadurch gekennzeichnet, dass** wenigstens eine der beiden Klemmbacken (11), vorzugsweise beide Klemmbacken (11) eine zur ersten Richtung geneigte Klemmfläche (113) aufweisen, mittels welchen die Relativbewegung der Klemmbacken (11) zueinander in die zweite Richtung in eine Bewegung der Klemmmittel (1) relativ zu den Führungsmitteln (2) in die erste Richtung umwandelbar ist.

4. Tragvorrichtung (E) nach Anspruch 2 oder 3, **dadurch gekennzeichnet, dass** die Klemmmittel (1) einen Klemmbackenführungskörper (10) umfassen, in dem wenigstens eine Führung für die Klemmbacken (11) vorgesehen ist.

5. Tragvorrichtung (E) nach Anspruch 4, **dadurch gekennzeichnet, dass** der Führungsköper (10) wenigstens einen Führungskanal (100, 101, 102) aufweist, in dem ein Abschnitt jeder Klemmbacke (11) angeordnet ist.

6. Tragvorrichtung (E) nach Anspruch 5, **dadurch gekennzeichnet, dass** der wenigstens eine Führungskanal (100, 101, 102) einen Boden (100) und dazu senkrechte, parallel zu der zweiten Richtung ausgerichtete Seitenwände (102) hat, wobei eine erste Übergangsfläche (101) zwischen dem Boden (100) und jeder der Seitenwände (102) vorgesehen ist und ein erster Winkel zwischen dem Boden (100) und erster Übergangsfläche (101) und ein zweiter Winkel zwischen der ersten Übergangsfläche (101) und der Seitenwand (102) vorgesehen ist, wobei die Summe des ersten Winkels und des zweiten Winkels 90° beträgt.

7. Tragvorrichtung (E) nach Anspruch 6, **dadurch gekennzeichnet, dass** der im Führungskanal (100, 101, 102) vorgesehene Abschnitt der Klemmbacken (11) zwei parallele Seitenwände (112) hat, die über zweite Übergangsflächen (111) mit einer Unterseite (110) verbunden sind, wobei ein Winkel zwischen der Unterseite (110) und den zweiten Übergangsflächen (111) den gleichen Betrag hat, wie der erste Winkel, und ein Winkel zwischen den zweiten Übergangsflächen (111) und den Seitenwänden (112) den gleichen Betrag hat, wie der zweite Winkel.

8. Tragvorrichtung (E) nach Anspruch 7, **dadurch gekennzeichnet, dass** die lichte Weite des Führungskanals (100, 101, 102) zwischen dessen Seitenwänden (102) etwas größer ist als der Abstand der Seitenwände (112) der im Führungskanal (100, 101, 102) vorgesehenen Abschnitte der Klemmbacken (11).

9. Tragvorrichtung (E) nach Anspruch 8, **dadurch gekennzeichnet, dass** die Unterseiten (110) der im Führungskanal (100, 101, 102) vorgesehenen Abschnitte der Klemmbacken (11) breiter ist als der Boden (100) des Führungskanals (100, 101, 102) und dass die Unterseiten (110) und der Boden (100) einen Abstand voneinander haben.

10. Tragvorrichtung (E) nach einem der Ansprüche 1 bis 9, **dadurch gekennzeichnet, dass** die Führungsmittel (2) und/oder die Klemmmittel (1) Anschlagsflächen (120) aufweisen, durch die die Bewegung der Klemmmittel (1) zum Führungsmittel (2) in der ersten Richtung begrenzt ist.

11. Anordnung aus einer Tragvorrichtung (E) nach einem der Ansprüche 1 bis 10, einer Führungsschiene (F) und einer Klemmschiene (K), wobei die Führungsschiene (F) und die Klemmschiene (K) fest miteinander verbunden sind, wobei die Führungsmittel (2) der Tragvorrichtung (E) in oder auf der Führungsschiene (F) verschiebbar angeordnet ist und wobei die Klemmmittel (1) in einem ersten Zustand der Klemmmittel (1) an, in oder auf der Klemmschiene (K) festgeklemmt sind und in einem zweiten Zustand der Klemmmittel (1) zu der Klemmschiene (K) bewegbar sind.

12. Anordnung nach Anspruch 11, **dadurch gekennzeichnet, dass** in dem ersten Zustand die Klemmschiene (K) die Klemmmittel (1) und ggf. an den Klemmmittel (1) befestigte weitere Mittel (3) trägt und im zweiten Zustand die Führungsschiene (F) die Führungsmittel (2), die Klemmmittel (1) und ggf. an die Klemmmittel (1) befestigte weitere Mittel (3) trägt.

13. Anordnung nach Anspruch 11 oder 12, **dadurch gekennzeichnet, dass** die Klemmschiene (K) ein Schwalbenschwanzprofil hat.

14. Gitterschweißmaschine mit einer Anordnung nach einem der Ansprüche 11 bis 13.

## Claims

1. Displaceable carrier (E) e.g. for electrodes of a welding machine, in particular for a grid welding machine,
- having clamping means (1), with which the carrier (E) can be clamped to a clamping rail (K) of the grid welding machine,
- wherein the clamping means (1) have at least one terminal element at which further means (3), for example at least one electrode, can be fastened,
- **characterised by**
guiding means (2) with which the carrier (E) can be displaced on a guiding rail (F) of the welding machine,
wherein
- the guiding means (2) are a part of the carrier (E) and not part of a carriage which can be coupled to the carrier (E) and
- the clamping means (1) are fastened to the guiding means (2) so as to be linearly displaceable in a first direction.

2. Carrier (E) according to claim 1, **characterised in that** the clamping means (K1) comprise a first clamping jaw (11) and a second clamping jaw (11) which are movable relative to one another in a second direction different from the first direction.

3. Carrier (E) according to claim 2, **characterised in that** at least one of the two clamping jaws (11), preferably both clamping jaws (11) have one clamping surface (113) inclined to the first direction, by means of which the relative movement of the clamping jaws (11) to one another in the second direction can be converted into a movement of the clamping means (1) relative to the guiding means (2) in the first direction.

4. Carrier (E) according to claim 2 or 3, **characterised in that** the clamping means (1) comprise a clamping jaw guiding body (10) in which at least one guide for the clamping jaws (11) is provided.

5. Carrier (E) according to claim 4, **characterised in that** the guiding body (10) has at least one guiding channel (100, 101, 102) in which a portion of each clamping jaw (11) is arranged.

6. Carrier (E) according to claim 5, **characterised in that** the at least one guiding channel (100, 101, 102) has a floor (100) and, perpendicular thereto, side walls (102) aligned parallel to the second direction, wherein a first transition surface (101) is provided between the floor (100) and each of the side walls (102) and a first angle between the floor (100) and first transition surface (101) and a second angle between the first transition surface (101) and the side wall (102) is provided, wherein the sum of the first angle and the second angle is 90°.

7. Carrier (E) according to claim 6, **characterised in that** the portion of the clamping jaws (11) provided in the guiding channel (100, 101, 102) has two parallel side walls (112) which are connected via two transition surfaces (111) to a bottom side (110), wherein a first angle between the bottom side (110) and the second transition surfaces (111) has the same magnitude as the first angle, and an angle between the second transition surfaces (111) and the side walls (112) has the same magnitude as the second angle.

8. Carrier (E) according to claim 7, **characterised in that** the clear span of the guiding channel (100, 101, 102) between its side walls (102) is slightly larger than the spacing of the side walls (112) of the portions of the clamping jaws (11) provided in the guiding channel (100, 101, 102).

9. Carrier (E) according to claim 8, **characterised in that** the bottom side (110) of the portions of the clamping jaws (11) provided in the guiding channel (100, 101, 102) is broader than the floor (100) of the guiding channel (100, 101, 102) and that the bottom sides (110) and the floor (100) are spaced from one another.

10. Carrier (E) according to any of claims 1 to 9, **characterised in that** the guiding means (2) and/or the clamping means (1) have abutment surfaces (120) by means of which the movement of the clamping means (1) towards the guiding means (2) in the first direction is limited.

11. Arrangement made of a carrier (E) according to any of claims 1 to 10, a guiding rail (F) and a clamping rail (K), wherein the guiding rail (F) and the clamping rail (K) are securely fastened to one another, wherein the guiding means (2) of the carrier (E) is arranged displaceably in or on the guiding rail (F) and wherein the clamping means (1) in a first state of the clamping means (1) are clamped securely against, in or on the clamping rail (K) and in a second state of the clamping means (1) are movable towards the clamping rail (K).

12. Arrangement according to claim 11, **characterised in that** in the first state the clamping rail (K) bears the clamping means (1) and where appropriate further means (3) fastened to the clamping means (1) and in the second state the guiding rail (F) bears the guiding means (2), the clamping means (1) and where appropriate further means (3) fastened to the clamping means (1).

13. Arrangement according to claim 11 or 12, **characterised in that** the clamping rail (K) has a swallowtail profile.

14. Grid welding machine having an arrangement according to any of claims 11 to 13.

## Revendications

1. Dispositif porteur (E) déplaçable par exemple pour des électrodes d'une machine à souder, en particulier pour une machine à souder de grillage,
- avec des moyens de serrage (1), avec lesquels le dispositif porteur (E) peut être bloqué au niveau d'un rail de serrage (K) de la machine à souder de grillage,
- dans lequel les moyens de serrage (1) présentent au moins un élément de raccordement auquel peuvent être fixés d'autres moyens (3), par exemple au moins une électrode,
- **caractérisé par**
des moyens de guidage (2) avec lesquels le dispositif porteur (E) est déplaçable sur un rail de guidage (F) de la machine à souder,
dans lequel
- les moyens de guidage (2) sont une partie du dispositif porteur (E) et ne font pas partie d'un chariot couplable au dispositif porteur (E) et
- les moyens de serrage (1) sont fixés aux moyens de guidage (2) de manière à être déplaçables linéairement dans un premier sens.

2. Dispositif porteur (E) selon la revendication 1, **caractérisé en ce que** les moyens de serrage (K1) comprennent une première mâchoire de serrage (11) et une seconde mâchoire de serrage (11) qui sont déplaçables l'une par rapport à l'autre dans un second sens différent du premier sens.

3. Dispositif porteur (E) selon la revendication 2, **caractérisé en ce qu'**au moins une des deux mâchoires de serrage (11), de préférence les deux mâchoires de serrage (11) présentent une surface de serrage (113) inclinée vers le premier sens, au moyen desquelles le mouvement relatif des mâchoires de serrage (11) l'une par rapport à l'autre dans le second sens peut être converti en un mouvement des moyens de serrage (1) par rapport aux moyens de guidage (2) dans le premier sens.

4. Dispositif porteur (E) selon la revendication 2 ou 3, **caractérisé en ce que** les moyens de serrage (1) comprennent un corps de guidage de mâchoire de serrage (10), dans lequel au moins un guidage est prévu pour les mâchoires de serrage (11).

5. Dispositif porteur (E) selon la revendication 4, **caractérisé en ce que** le corps de guidage (10) présente au moins un canal de guidage (100, 101, 102), dans lequel une section de chaque mâchoire de serrage (11) est agencée.

6. Dispositif porteur (E) selon la revendication 5, **caractérisé en ce que** l'au moins un canal de guidage (100, 101, 102) présente un fond (100) et des parois latérales (102) perpendiculaires à celui-ci, orientées parallèlement au second sens, dans lequel une première surface de transition (101) est prévue entre le fond (100) et chacune des parois latérales (102) et un premier angle est prévu entre le fond (100) et la première surface de transition (101) et un second angle est prévu entre la première surface de transition (101) et la paroi latérale (102), dans lequel la somme du premier angle et du second angle s'élève à 90°.

7. Dispositif porteur (E) selon la revendication 6, **caractérisé en ce que** la section prévue dans le canal de guidage (100, 101, 102) des mâchoires de serrage (11) présente deux parois latérales (112) parallèles qui sont reliées à un côté inférieur (110) par le biais de secondes surfaces de transition (111), dans lequel un angle entre le côté inférieur (110) et les secondes surfaces de transition (111) présente la même valeur que le premier angle, et un angle entre les secondes surfaces de transition (111) et les parois latérales (112) présente la même valeur que le second angle.

8. Dispositif porteur (E) selon la revendication 7, **caractérisé en ce que** la largeur intérieure du canal de guidage (100, 101, 102) entre ses parois latérales (102) est un peu plus grande que la distance des parois latérales (112) des sections prévues dans le canal de guidage (100, 101, 102) des mâchoires de serrage (11).

9. Dispositif porteur (E) selon la revendication 8, **caractérisé en ce que** les côtés inférieurs (110) des sections prévues dans le canal de guidage (100, 101, 102) des mâchoires de serrage (11) sont plus larges que le fond (100) du canal de guidage (100, 101, 102) et **en ce que** les côtés inférieurs (110) et le fond (100) sont espacés les uns des autres.

10. Dispositif porteur (E) selon l'une quelconque des revendications 1 à 9, **caractérisé en ce que** les moyens de guidage (2) et/ou les moyens de serrage (1) présentent des surfaces de butée (120) par lesquelles le mouvement des moyens de serrage (1) vers les moyens de guidage (2) est limité dans le premier sens.

11. Ensemble composé d'un dispositif porteur (E) selon l'une quelconque des revendications 1 à 10, d'un rail de guidage (F) et d'un rail de serrage (K), dans lequel le rail de guidage (F) et le rail de serrage (K) sont reliés l'un à l'autre de manière fixe, dans lequel les moyens de guidage (2) du dispositif porteur (E) sont agencés de manière déplaçable dans ou sur le rail de guidage (F) et dans lequel les moyens de serrage (1) sont bloqués dans un premier état des moyens de serrage (1) au niveau, dans ou sur le rail de serrage (K) et sont mobiles vers le rail de serrage (K) dans un second état des moyens de serrage (1).

12. Ensemble selon la revendication 11, **caractérisé en ce que** dans le premier état, le rail de serrage (K) porte les moyens de serrage (1) et éventuellement d'autres moyens (3) fixés aux moyens de serrage (1) et dans le second état, le rail de guidage (F) porte les moyens de guidage (2), les moyens de serrage (1) et éventuellement d'autres moyens (3) fixés aux moyens de serrage (1).

13. Ensemble selon la revendication 11 ou 12, **caractérisé en ce que** le rail de serrage (K) présente un profil en queue d'aronde.

14. Machine à souder de grillage avec un ensemble selon l'une quelconque des revendications 11 à 13.
